# DEMANDE DE BREVET EUROPEEN

(11) **EP 2 380 421 A1**
(43) Date de publication de la demande: **26.10.2011**
(21) Numéro de dépôt: 11305472.0
(22) Date de dépôt: 20.04.2011
(51) Int. Cl.: A01B 1/08, A01B 1/14

(54) **Dispositif d'outil pour le travail du sol**

(30) Priorité: 21.04.2010 FR 1053029
(71) Demandeur: Pellenc SA, 84120 Pertuis (FR)
(72) Inventeur: Pellenc, Roger, 84120, Pertuis (FR)
(74) Mandataire: Nuss, Laurent

(57) **Abrégé**

La présente invention a pour objet un dispositif d'outil manuel ou motorisé pour le travail de la terre et du sol, du type binette, bineuse, grattoir ou analogue, comprenant essentiellement un outil de travail monté, de manière amovible ou non, à l'extrémité avant d'un manche ou analogue, pourvu ou non d'une ou de plusieurs zones ou poignées de préhension spécifiques, ledit outil de travail étant essentiellement composé d'une bande en métal, d'un seul tenant et pliée ou assemblée par soudure de plusieurs parties, ce pour constituer une partie inférieure (6) en forme de U, au moins partiellement coupante, et une partie supérieure conformée pour un montage sur l'extrémité avant (3') du manche (3), la portion de bande s'étendant entre les branches de la partie en U (6) et formant l'âme de ce dernier comportant un profil dentelé avec des dents au niveau de ses deux bords longitudinaux opposés, préférentiellement disposées en quinconce.

Dispositif (1) caractérisé en ce que ladite portion de bande est coupante au niveau de ses deux bords longitudinaux opposés.

## Description

La présente invention concerne le domaine des instruments et outils de jardinage et de travail des champs et des espaces verts, et plus généralement les dispositifs d'outils manuels ou motorisés utilisés par les particuliers et/ou les professionnels pour le travail du sol et de la terre, nue, cultivée, plantée ou en friche.

L'invention porte plus particulièrement sur un dispositif d'outil manuel ou motorisé pour le travail de la terre et du sol.

On connaît déjà de nombreuses variantes de réalisation d'outils de ce type, à maniement entièrement manuel ou à assistance motorisée.

Ces outils présentent des formes diverses, en particulier au niveau de l'extrémité travaillant le sol, ce en fonction de la nature du travail à effectuer et éventuellement de la nature du sol et de la végétation de l'endroit à traiter.

Ainsi, on connaît notamment les houes qui servent à ameublir la terre plus ou moins profondément, les binettes ou bineuses qui ameublissent la terre en superficie et coupent au moins en partie les mauvaises herbes, les sarcloirs qui permettent plus spécifiquement d'enlever les mauvaises herbes, les griffes qui désagglomèrent les sols compacts et les aèrent ou encore les outils de finition des bordures.

Ces outils étant relativement spécialisés dans leurs fonctions respectives, il est souvent nécessaire d'en utiliser plusieurs successivement pour réaliser un traitement complet et une préparation adéquate de la terre.

Il existe ainsi une demande pour un outil de travail du sol et de la terre qui permette de réaliser simultanément au moins plusieurs des différentes fonctions précitées, tout en présentant une constitution simple et en faisant état d'un prix de revient faible.

Dans ce contexte, il a été proposé par le document US-A-3 965 991 une binette munie d'un manche allongé, au bout duquel est disposé, avec faculté de rotation autour d'un axe perpendiculaire audit manche, un outil de coupe. Ce dernier présente une lame pliée en forme de U et insérée par ses extrémités dans les deux extrémités libres d'un tube aplati, lui aussi plié en forme de U, l'âme de ce dernier étant solidaire du manche.

De même, FR-A-2 394 971 divulgue une binette de constitution semblable à celle décrite plus haut. L'outil de coupe, lui aussi légèrement mobile en rotation, est constitué par une lame pliée en forme de U, mais dont les ailes sont pliées à leur extrémité de façon parallèle à l'âme du U. C'est au niveau de ces deux extrémités que la lame est alors prise entre deux plaques métalliques, assujetties au manche de l'appareil.

Par les documents GB-A-682 536 et DE-C-964 545, on connaît, par ailleurs, des outils de travail du sol du type binette ou houe, montés sur un manche correspondant et dont la partie active en forme de lame horizontale présente un profil ondulé ou dentelé.

Toutefois, il s'avère à l'usage que ces binettes connues ne font pas état d'une efficacité de travail optimale, en particulier en ce qui concerne le sectionnement des racines et/ou la possibilité d'un fonctionnement réversible.

La présente invention a pour but de pallier les limitations de ces outils connus.

A cet effet, l'invention a pour objet un dispositif d'outil manuel ou motorisé pour le travail de la terre et du sol, du type binette, bineuse, grattoir ou analogue, comprenant essentiellement un outil de travail monté, de manière amovible ou non, à l'extrémité avant d'un manche ou analogue, pourvu ou non d'une ou de plusieurs zones ou poignées de préhension spécifiques, ledit outil de travail étant essentiellement composé d'une bande en métal, d'un seul tenant et pliée ou assemblée par soudure de plusieurs parties, ce pour constituer une partie inférieure en forme de U, au moins partiellement coupante, et une partie supérieure conformée pour un montage sur l'extrémité avant du manche,
dispositif caractérisé en ce que la portion de bande s'étendant entre les branches de la partie en U et formant l'âme de ce dernier comporte un profil dentelé avec des dents au niveau de ses deux bords longitudinaux opposés, préférentiellement disposées en quinconce, et
en ce que ladite portion de bande est coupante au niveau de ses deux bords longitudinaux opposés, notamment au niveau des dents 11 tranchantes.

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels :
la figure 1 est une vue en perspective d'un dispositif d'outil à main ou à maniement manuel selon un premier mode de réalisation de l'invention, en cours d'utilisation ;
la figure 2 est une vue en perspective d'un dispositif d'outil motorisé selon un second mode de réalisation de l'invention, en cours d'utilisation ;
les figures 3 à 5 sont des vues en perspective de différents modes de réalisation de l'outil de travail faisant partie du dispositif selon l'invention, en particulier tel que représenté sur les figures 1 et 2 ;
les figures 6 à 8 sont des vues en élévation frontales de trois variantes constructives de l'outil de travail représenté sur la figure 3, se différenciant par leur interface de raccordement et de fixation ;
la figure 9 est une vue éclatée en perspective illustrant l'outil de travail de la figure 3 associé à une interface de raccordement et de fixation, selon un mode de réalisation du dispositif selon l'invention tel qu'illustré sur la figure 2, et,
la figure 10 est une vue de détail à une autre échelle de l'extrémité avant du manche et de l'outil de travail du dispositif d'outil représenté figure 1.

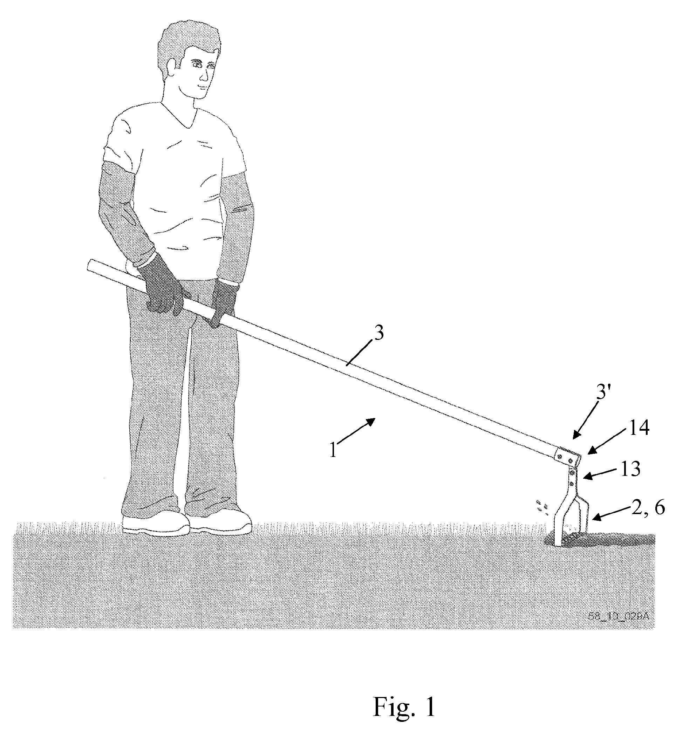

Les figures 1, 2 et 10 des dessins annexés montrent un dispositif d'outil 1 manuel ou motorisé pour le travail de la terre et du sol, du type binette, bineuse, grattoir ou analogue, comprenant essentiellement un outil de travail 2 monté, de manière amovible ou non, à l'extrémité avant 3' d'un manche 3 ou analogue, pourvu ou non d'une ou de plusieurs zones ou poignées de préhension 4 spécifiques.

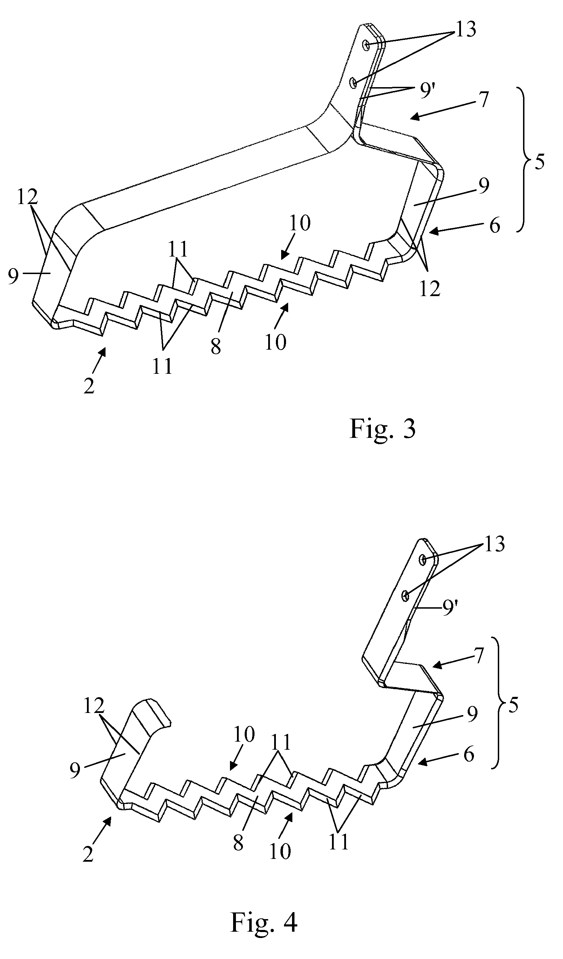

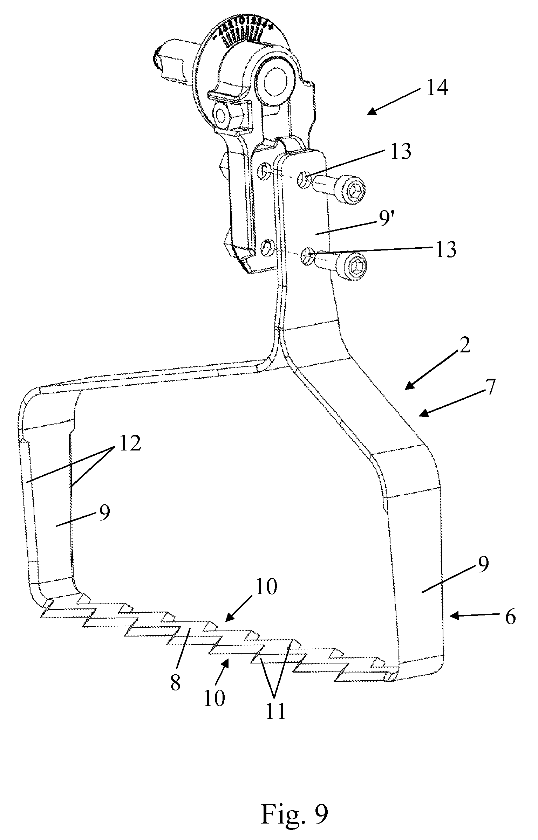

Comme le montrent les figures 3 à 9 des dessins, cet outil de travail 2 est essentiellement composé d'une bande en métal 5, d'un seul tenant et pliée ou assemblée par soudure de plusieurs parties, ce pour constituer une partie inférieure 6 en forme de U, au moins partiellement coupante, et une partie supérieure 7 conformée pour un montage sur l'extrémité avant 3' du manche 3.

Conformément à l'invention, la portion de bande 8 s'étendant entre les branches 9 de la partie en U 6 et formant l'âme de ce dernier est coupante au niveau de ses deux bords longitudinaux opposés 10 et ces bords 10 présentent un profil non rectiligne à configuration dentelée.

La prévision de bords 10 avec des profils dentelés, c'est-à-dire le bord dirigé vers l'utilisateur en cours d'utilisation et le bord opposé, permet de faciliter et d'optimiser le sectionnement des racines (du fait de la réalisation d'un mouvement de tranchage) et de rendre le déplacement de l'outil de travail 2 dans le sol plus aisé.

En outre, avec les deux bords 10 coupants, il est possible d'utiliser l'outil de travail 2 dans deux dispositions de montage opposées (retournement de l'outil de travail 2 à 180 °).

De plus, l'outil 2 travaille dans les deux directions de déplacement (lorsqu'il se rapproche de l'utilisateur et lorsqu'il s'en éloigne).

La portion de bande formant l'âme plane 8 du U comporte un profil dentelé avec des dents 11 au niveau de ses deux bords longitudinaux opposés 10 et les portions de bande 9 formant les branches du U sont coupantes au niveau de leurs deux bords longitudinaux 12, fournissant des dents tranchantes.

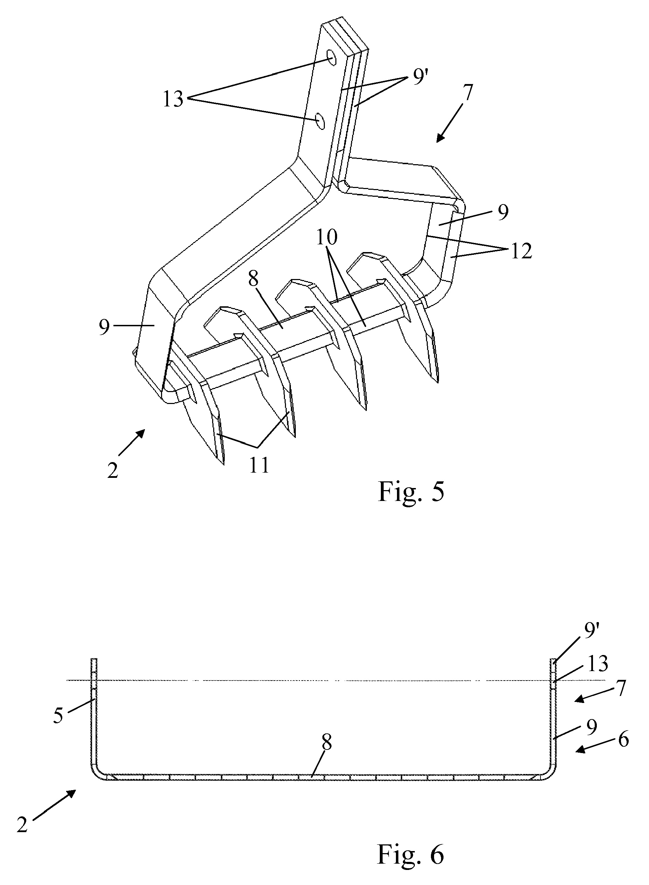

Les dents 11 peuvent, comme le montre la figure 5, être rapportées (par exemple par soudure), selon une orientation orthogonale, sur la portion de la bande 8 formant l'âme coupante de la partie 6 en forme de U de l'outil 2, positivement active pour traiter le sol lors de l'utilisation du dispositif d'outil 1.

En accord avec l'invention dans sa variante préférée toutefois, et comme le montrent les figures 3, 4 et 9 des dessins, les dents 11, avantageusement de forme triangulaire, sont découpées dans la portion de bande 8 formant l'âme plate du U, cette dernière présentant une disposition en quinconce des dents 11 le long des bords opposés 10 conférant à l'âme une forme générale en zigzag, avec ses deux bords opposés 10 tranchants et coupants à profils dentelés.

Les deux bords longitudinaux 10 de l'âme 8 présentent ainsi une pluralité de lames tranchantes inclinées élémentaires, mutuellement décalées d'un bord à l'autre, fournies par les dents 11.

L'outil de travail 2 est conformé de manière à disposer d'un espace dégagé suffisant au niveau de sa partie supérieure 7, pour permettre notamment le passage des herbes et plantes coupées et éviter ainsi un bourrage.

Divers modes d'assemblage de l'outil de travail 2 avec le manche 3 peuvent être envisagés et leur réalisation pratique fait partie des connaissances professionnelles normales de l'homme du métier.

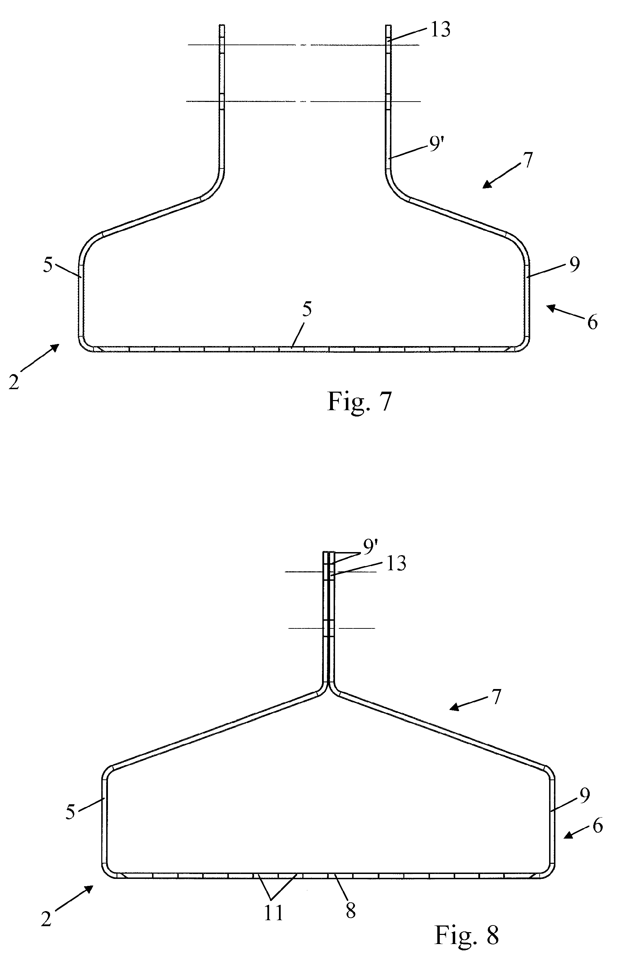

Ainsi, selon une première variante, ressortant des figures 6 et 7, la partie supérieure 7 de l'outil de travail 2 conformée pour un montage sur l'extrémité 3' du manche 3 comporte deux sites de raccordement et de fixation 13 espacés et situés aux extrémités de prolongements 9' des deux branches 9 du U qui forme la partie inférieure coupante 6.

Selon une seconde variante, ressortant des figures 3, 4, 5, 8 et 9, la partie supérieure 7 de l'outil de travail 2 conformée pour un montage sur le manche 3 comporte un unique site de raccordement et de fixation 13, centré ou non par rapport au U et situé à l'extrémité du prolongement 9' de l'une au moins des deux branches 9 du U qui forme la partie inférieure coupante 6. La taille et la forme de l'outil de travail 2 sont ainsi totalement libres et indépendantes du mode de fixation.

Dans les deux cas précités, l'outil de travail 2 intègre sa composante de l'interface de montage sur le manche 3.

De même, différentes formes d'outils de travail 2 peuvent être conçues dans le cadre des caractéristiques mentionnées ci-dessus.

En accord avec une première variante constructive, illustrée sur les figures 3, 5, 8 et 9, l'outil de travail 2 présente une forme en boucle, avec une base coupante en U rectangulaire 6 et avec une partie supérieure 7 effilée, au moins partiellement fermée sur elle-même, les extrémités opposées 13 de la bande en métal le constituant étant mutuellement en contact ou séparées.

En accord avec une seconde variante constructive, seule l'une des deux branches 9 du U formant la partie inférieure coupante 6 de l'outil de travail 2 est prolongée par une portion de bande 9' formant patte de raccordement et de fixation, l'outil de travail 2 présentant une structure ouverte à fixation unilatérale (figure 4).

Afin de rendre l'usage du dispositif 1 le plus ergonomique possible et permettre son adaptation à différents utilisateurs, il est avantageusement prévu que le moyen 14 de montage et de fixation de l'outil de travail 2 sur le manche 3 autorise un réglage, avec blocage amovible en position, de l'angle d'inclinaison entre ledit outil de travail 2 et ledit manche 3. Il est ainsi possible d'adapter le dispositif 1 à des utilisateurs de tailles différentes ou de le régler en vue de réaliser des travaux spécifiques nécessitant une inclinaison déterminée de l'outil 2, par exemple en vue de l'utilisation efficace des deux bords tranchants 10 opposés, autorisant également une sollicitation différenciée des muscles en exploitant un second mouvement actif de travail du sol (mouvements alternatifs de poussée et de traction de l'outil).

La figure 1 illustre un dispositif d'outil 1 du type à maniement manuel.

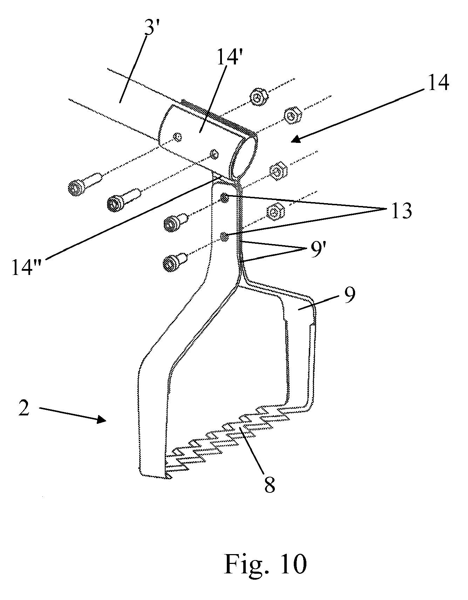

Les figures 1 et 10 illustrent un exemple d'assemblage d'un outil de travail 2 avec un manche 3 pour former un dispositif d'outil 1 manuel.

Dans cette réalisation pratique, l'outil 2 est formé par une bande de métal 5 d'un seul tenant et pliée, et comporte une partie supérieure 7 avec des sites 13 de raccordement et de fixation, ménagés au niveau de prolongements 9' des deux branches 9 du U.

L'outil de travail 2 présente une structure semblable à celle représentée sur la figure 7, les deux extrémités 9' n'étant pas reliées, par exemple soudées, entre elles.

Le moyen de montage et de fixation 14 solidaire du manche 3 consiste, comme le montrent les figures 1 et 10, en un fourreau tubulaire fendu 14' fixé par des vis à l'extrémité 3' du manche et pourvu d'une patte de fixation 14". A l'état monté, cette patte 14" qui se retrouve pincée entre les extrémités 9' de l'outil 2 et solidarisé rigidement à ces dernières par des ensembles vis/écrou traversant les sites 13.

Un moyen d'absorption des vibrations et/ou des chocs, le cas échéant réglable en intensité, peut éventuellement prévu au niveau du manche 3 ou de l'interface de raccordement entre le manche 3 et l'outil de travail 2 (non représenté), sans toutefois réduire l'efficacité de l'outil 2, ni compromettre la transmission des efforts à ce dernier.

Ce moyen peut, par exemple, comprendre des pièces anti-vibratiles (telles que par exemple des "silent blocs" - marque déposée), un support soumis à l'action d'un ressort ou intégrant un ressort, une partie métallique déformable, un insert ou une pièce intercalaire en caoutchouc ou en un matériau résilient ou élastique analogue.

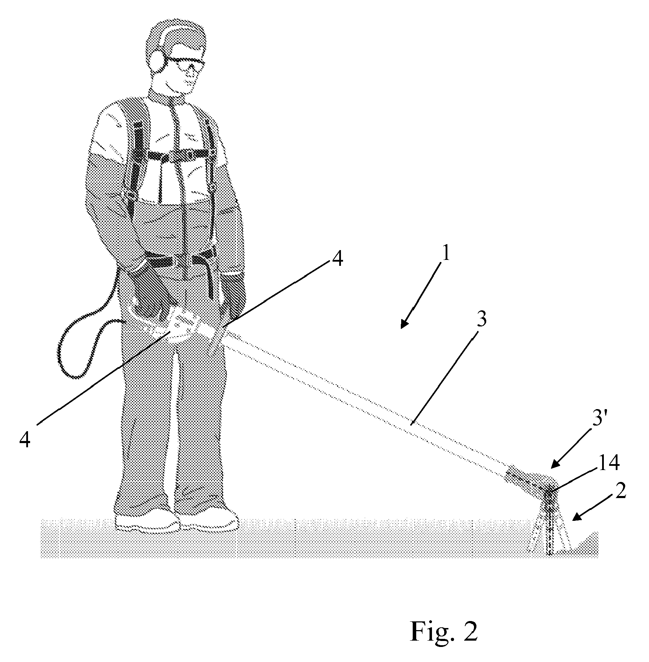

Conformément à un autre mode de réalisation, illustré sur la figure 2, le dispositif d'outil 1 peut également consister en un appareil motorisé portatif pour le travail de la terre et du sol, comprenant, d'une part, un manche 3 qui comporte, à une première extrémité, une zone et/ou au moins un organe ou une poignée 4 de préhension pour l'utilisateur, et, à l'extrémité opposée 3', une tête 14 à laquelle est relié par une liaison rotatoire ou pivotante, l'outil de travail 2.

Ce dernier est, en utilisation dudit dispositif 1, animé d'un mouvement oscillant alternatif sur une fraction de tour et autour d'une position angulaire médiane déterminée, ce sous l'effet du mouvement transmis par un dispositif d'entraînement comprenant au moins un actionneur électrique ou un moteur thermique, l'outil de travail 2 étant relié à la tête 14 de manière amovible et la position angulaire médiane dudit outil de travail 2 étant réglable.

Un tel appareil motorisé portatif est notamment décrit plus en détail dans la demande de brevet français n° 1053027 déposée le 21 avril 2010 au nom de la demanderesse.

L'invention a également pour objet un outil de travail 2 interchangeable pour un dispositif d'outil 1 manuel ou motorisé pour le travail de la terre et du sol tel que décrit précédemment, ledit outil de travail 2 étant destiné à être monté avec fixation rigide sur le manche 3 dudit dispositif 1.

Cet outil de travail 2 est essentiellement composé d'une bande en métal 5, d'un seul tenant et pliée ou résultant de l'assemblage de plusieurs parties, qui constitue une partie inférieure coupante 6 en forme de U et une partie supérieure 7 conformée pour un montage sur l'extrémité avant 3' du manche 3, la portion 8 de bande métallique s'étendant entre les branches 9 de la partie en U 6 et formant l'âme de ce dernier comportant un profil dentelé avec des dents 11 au niveau de ses deux bords latéraux opposés (10), préférentiellement disposées en quinconce.

Conformément à l'invention, la portion de bande 8 est coupante au niveau de ses deux bords 10.

Par ailleurs, ledit outil 2 peut présenter une ou plusieurs des caractéristiques additionnelles évoquées ci-dessus.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif d'outil manuel ou motorisé pour le travail de la terre et du sol, du type binette, bineuse, grattoir ou analogue, comprenant essentiellement un outil de travail monté, de manière amovible ou non, à l'extrémité avant d'un manche ou analogue, pourvu ou non d'une ou de plusieurs zones ou poignées de préhension spécifiques,
ledit outil de travail (2) étant essentiellement composé d'une bande (5) en métal, d'un seul tenant et pliée ou assemblée par soudure de plusieurs parties, ce pour constituer une partie inférieure (6) en forme de U, au moins partiellement coupante, et une partie supérieure (7) conformée pour un montage sur l'extrémité avant (3') du manche (3),
dispositif **caractérisé en ce que** la portion de bande (8) s'étendant entre les branches (9) de la partie en U (6) et formant l'âme de ce dernier comporte un profil dentelé avec des dents (11) au niveau de ses deux bords longitudinaux opposés (10), préférentiellement disposées en quinconce, et **en ce que** ladite portion de bande (8) est coupante au niveau de ses deux bords longitudinaux opposés (10), notamment au niveau des dents (11) tranchantes.

2. Dispositif d'outil selon la revendication 1, **caractérisé en ce que** les portions de bande (9) formant les branches du U sont coupantes au niveau de leurs deux bords longitudinaux opposés (12) respectifs.

3. Dispositif d'outil selon l'une quelconque des revendications 1 et 2, **caractérisé en ce qu'**il comprend un moyen (14) de montage et de fixation de l'outil de travail (2) sur le manche (3) autorisant un réglage, avec blocage amovible en position, de l'angle d'inclinaison entre ledit outil de travail (2) et ledit manche (3).

4. Dispositif d'outil selon l'une quelconque des revendications 1 à 3, **caractérisé en ce que** la partie supérieure (7) de l'outil de travail (2) conformée pour un montage sur l'extrémité (3') du manche (3) comporte deux sites de raccordement et de fixation (13) espacés et situés aux extrémités de prolongements (9') des deux branches (9) du U qui forme la partie inférieure coupante (6).

5. Dispositif d'outil selon l'une quelconque des revendications 1 à 3, **caractérisé en ce que** la partie supérieure (7) de l'outil de travail (2) conformée pour un montage sur le manche (3) comporte un unique site de raccordement et de fixation (13), centré ou non par rapport au U et situé à l'extrémité du prolongement (9') de l'une au moins des deux branches (9) du U qui forme la partie inférieure coupante (6).

6. Dispositif d'outil selon l'une quelconque des revendications 1 à 5, **caractérisé en ce que** l'outil de travail (2) présente une forme en boucle, avec une base coupante en U rectangulaire (6) et avec une partie supérieure (7) effilée, au moins partiellement fermée sur elle-même, les extrémités opposées (13) de la bande en métal le constituant étant mutuellement en contact ou séparées.

7. Dispositif d'outil selon l'une quelconque des revendications 1 à 3 et 5, **caractérisé en ce que** seule l'une des deux branches (9) du U formant la partie inférieure coupante (6) de l'outil de travail (2) est prolongée par une portion de bande (9') formant patte de raccordement et de fixation, l'outil de travail (2) présentant une structure ouverte à fixation unilatérale.

8. Dispositif d'outil selon l'une quelconque des revendications 1 à 7, **caractérisé en ce qu'**il comprend un moyen d'absorption des vibrations et/ou des chocs, au niveau du manche (3) ou au niveau de l'interface de raccordement entre le manche (3) et l'outil de travail (2).

9. Dispositif d'outil selon l'une quelconque des revendications 1 à 8, **caractérisé en ce qu'**il est du type à maniement manuel.

10. Dispositif d'outil selon l'une quelconque des revendications 1 à 8, **caractérisé en ce qu'**il consiste en un appareil motorisé portatif pour le travail de la terre et du sol, comprenant, d'une part, un manche (3) qui comporte, à une première extrémité, une zone et/ou au moins un organe ou une poignée (4) de préhension pour l'utilisateur, et, à l'extrémité opposée (3'), une tête (14) à laquelle est relié par une liaison rotatoire ou pivotante, l'outil de travail (2) qui, en utilisation dudit dispositif (1), est animé d'un mouvement oscillant alternatif sur une fraction de tour et autour d'une position angulaire médiane déterminée, ce sous l'effet du mouvement transmis par un dispositif d'entraînement comprenant au moins un actionneur électrique ou un moteur thermique, l'outil de travail (2) étant relié à la tête (14) de manière amovible et la position angulaire médiane dudit outil de travail (2) étant réglable.

11. Outil de travail interchangeable pour dispositif d'outil manuel ou motorisé pour le travail de la terre et du sol selon l'une quelconque des revendications 1 à 10,
ledit outil de travail (2) étant destiné à être monté avec fixation rigide sur le manche (3) dudit dispositif (1) et étant essentiellement composé d'une bande en métal, d'un seul tenant et pliée ou résultant de l'assemblage de plusieurs parties, qui constitue une partie inférieure coupante (6) en forme de U et une partie supérieure (7) conformée pour un montage sur l'extrémité avant (3') du manche (3),
outil **caractérisé en ce que** la portion (8) de bande métallique s'étendant entre les branches (9) de la partie en U (6) et formant l'âme de ce dernier comporte un profil dentelé avec des dents (11) au niveau de ses deux bords latéraux opposés (10), préférentiellement disposées en quinconce, et **en ce que** ladite portion de bande (8) est coupante au niveau de ses deux bords longitudinaux opposés (10), notamment au niveau des dents (11) tranchantes.
